# EUROPÄISCHE PATENTSCHRIFT

(11) **EP 1 498 838 B1**
(45) Veröffentlichungstag und Bekanntmachung des Hinweises auf die Patenterteilung: **05.09.2007**
(21) Anmeldenummer: 03015679.8
(22) Anmeldetag: 18.07.2003
(51) Int. Cl.: G06K 9/00

(54) **Verfahren zur automatischen Verifikation der Identität einer Person und biometrisches Identifikationsdokument zur Verwendung in dem Verfahren**
Method for automatic verification of a person's identity and biometric identity document for use in the method
Procédé de vérification automatique de l'identité d'une personne et document d'identité biométrique à utiliser dans le procédé

(43) Veröffentlichungstag der Anmeldung: 19.01.2005
(73) Patentinhaber: DERMALOG Identification Systems GmbH, 20148 Hamburg (DE)
(72) Erfinder: Mull, Günther, 22085 Hamburg (DE)
(74) Vertreter: UEXKÜLL & STOLBERG

(56) Entgegenhaltungen:
- EP-A- 0 778 541
- WO-A-99/59099
- GB-A- 2 243 235
- US-B1- 6 292 092
- PATENT ABSTRACTS OF JAPAN vol. 1996, no. 05, 31. Mai 1996 (1996-05-31) & JP 08 016788 A (YUUSEIDAIJIN;OTHERS: 02), 19. Januar 1996 (1996-01-19)
- PATENT ABSTRACTS OF JAPAN vol. 010, no. 387 (P-530), 25. Dezember 1986 (1986-12-25) & JP 61 175865 A (MITSUBISHI ELECTRIC CORP), 7. August 1986 (1986-08-07)

## Beschreibung

Die vorliegende Erfindung betrifft ein Verfahren zur automatischen Verifikation der Identität einer Person durch vergleich eines aktuell sensorisch aufgenommenen biometrischen Merkmals der Person mit einem biometrischen Datensatz einer vorherigen Merkmalsaufnahme, nach dem Oberbegriff des Patentanspruchs 1.

Bei dem biometrischen Merkmal kann es sich z.B. um Fingerabdrücke, Gesichtsmerkmale oder Iris-Merkmale handeln. Unter Identifikationsdokumenten werden vorwiegend Ausweise, Pässe, Identitätskarten, Visa, Karten für die Zugangskontrolle in Betrieben und dergleichen verstanden. Unter "sensorischer" Aufnahme wird jedwede bildartige Aufzeichnung verstanden, sei es durch einen kapazitiv arbeitenden Fingerabdruck-Sensorchip, eine Kamera, ein CCD (Charged Coupled Device) oder dergleichen.

Es ist bekannt, Fingerabdrücke und andere biometrische Personenmerkmale in Ergänzung zu Personendaten als Bild oder als Datensatz in Form eines zweidimensionalen Barcodes auf Identifikationskarten, Ausweisen, Visa, Reisepässen, Führerscheinen oder anderen Personaldokumenten aufzudrucken. Dies kann in unverschlüsselter oder verschlüsselter Form erfolgen. Die wichtigsten Personendaten erscheinen dabei oft in einem sogenannten maschinenlesbaren Code-Bereich, dem sogenannten ICAO-Code (benannt nach der nationalen Standardisierungsorganisation für Reisedokumente).

Seit einiger Zeit werden für die Abspeicherung von Personendaten und biometrischer Merkmale auch Chipkarten, wie insbesonde-Smart-Cards (Karten mit Prozessor-Chip), zur Speicherung der Personendaten wie auch von biometrischen Daten, wie etwa einen Fingerabdruck-Datensatz, verwendet. Ein Verfahren gemäß Oberbegriff von Patentanspruch 1, bei dem Fingerabdruckdaten aus einer Identifikationskarte mit einem Speicher-Chip ausgelesen werden und mit einem aktuell aufgenommenen Fingerabdruck verglichen werden, ist in DE 101 26 369 A1 beschrieben.

In neuerer Zeit werden zur Abspeicherung von biometrischen Merkmalen und Personendaten auf Identifikationsdokumenten auch kontaktlose Chips oder Transponder-Chips oder RFIDs verwendet, die in Identifikationskarten, Pässen etc. eingesetzt werden können. Diese bestehen aus einem Chip und einer Antenne zur Datenübertragung, die in eine Karte integriert, in die Rückseite eines Passes integriert oder auf eine Seite eines Dokuments aufgeklebt sind. Diese Daten werden von einem Lesegerät ausgelesen, welches in der Regel aus einer Antenne und einer Leseelektronik besteht und sich zum Auslesen der Daten in der Regel in einem Abstand von wenigen Millimetern bis zu einem Meter von dem auszulesenden Transponder befinden muss.

Zur Ausführung des Verfahrens zur automatischen Verifikation der Identität einer Person ist das Lesegerät dann in der Regel an einen Computer angeschlossen, in dem Software geladen ist, um das Verfahren automatisch auszuführen. Am gebräuchlichsten sind heute folgende drei Systemtypen für kontaktlose Karten: Myfair, Legic und I-Code. Ausgewertet werden können neben Personendaten biometrische Merkmale wie Fingerabdrücke, entweder alleine oder in Kombination mit biometrischen Merkmalen, wie z.B. Gesichtsmerkmalen oder der Iris.

Folgende Fehler können bei der automatischen Verifikation der Identität einer Person durch Vergleich eines aktuell sensorisch erfassten biometrischen Merkmals mit dem gespeicherten Datensatz des vorab aufgezeichneten biometrischen Merkmals auftreten. Es besteht zum einen eine gewisse Wahrscheinlichkeit, dass eine Person mit einem nicht zu ihr gehörigen Identifikationsdokument (d.h. dem Identifikationsdokument einer anderen Person) bei der automatischen Verifikation fälschlich positiv verifiziert oder akzeptiert wird (FAR = False Acceptance Rate). Demgegenüber besteht auch eine gewisse Wahrscheinlichkeit, dass eine richtige Person mit dem ihr zugehörigen richtigen Identifikationsdokument bei der automatischen Verifikation der Identität durch Vergleich der gespeicherten und aufgezeichneten biometrischen Merkmale fälschlich negativ verifiziert oder abgelehnt wird (FRR = False Rejection Rate).

Obwohl mit biometrischen Verifikationsverfahren grundsätzlich relativ hohe Erkennungssicherheit realisierbar ist, d.h. niedrige FAR- und FRR-Werte, besteht, insbesondere wenn eine Person das fragliche biometrische Merkmal nur flüchtig oder unachtsam an dem Lesegerät sensorisch aufnehmen lässt, z.B. den Finger nur teilweise auflegt, ein gewisses Risiko, dass das automatische Verifikationsverfahren die Person mit dem ihr zugehörigen richtigen Identifikationsdokument fälschlich als nicht verifiziert zurückweist, da kein ausreichendes Übereinstimmungsmaß festgestellt werden kann. Dies führt zu Unannehmlichkeiten und Verzögerungen, da das Verfahren dann wiederholt werden muss.

Aus EP EP-A-0778541 ist ein Verfahren mit den Merkmalen des Oberbegriffs des Patentanspruchs 1 bekannt. Darin ist eine Identifizierungsvorrichtung beschrieben, die die Datensätze eines biometrischen Merkmals einer Person aus einer Mehrzahl von Merkmalsaufnahmen unter unterschiedlichen Aufnahmebedingungen speichern kann. Für eine aktuelle Identifizierung wird das aktuell aufgenommene biometrische Merkmal mit der Mehrzahl der Datensätze der vorherigen Merkmalsaufnahmen verglichen und dadurch ein Übereinstimmungsmaß bestimmt. Dieses Identifizierungsverfahren ist allerdings wenig flexibel, da die zur Identifizierung verwendeten biometrischen Datensätze mehrerer Merkmalsaufnahmen jeder Person in der Identifizierungsvorrichtung selbst gespeichert sind, so dass nur am Ort dieser Identifizierungsvorrichtung dort eine Identifizierung vorgenommen wird.

Es ist Aufgabe der vorliegenden Erfindung, ein automatisches biometrisches Verifikationsverfahren für die Identität einer Person durch Vergleich einer aktuellen sensorischen biometricschen Aufnahme mit auf einem Identitätsdokument aufgezeichneten biometrischen Daten anzugeben, mit dem die Erkennungssicherheit erhöht werden kann, insbesondere die Wahrscheinlichkeit, dass eine Person trotz Vorlage des richtigen, ihr zugehörigen Identifikationsdokuments fälschlich als nicht verifiziert zurückgewiesen wird (FRR-Wert), minimiert werden kann.

Zur Lösung dieser Aufgabe dient ein Verfahren mit den Merkmalen des Patentanspruchs 1.

Die biometrischen Datensätze einer Mehrzahl von vorherigen Merkmalsaufnahmen, die unter unterschiedlichen Aufnahmebedingungen aufgenommen wurden, können aus dem Identitätsdokument ausgelesen werden und jeweils mit den aktuell aufgenommenen biometrischen Merkmalsdaten verglichen werden und jeweils ein Übereinstimmungsmaß berechnet werden.

Zur Erhöhung der Erkennungssicherheit (d.h. zur Minimierung der FAR- und FRR-Werte) dient die mehrfache Abspeicherung eines biometrischen Merkmals, wie z.B. eines bestimmten Fingerabdrucks, auf dem Identitätsdokument, wobei die abgespeicherten Aufnahmen unter verschiedenen Aufnahmebedingungen gewonnen sind. Z.B. kann ein und derselbe Fingerabdruck abgerollt, mittig aufgelegt, von beiden Seiten oder aber im Kuppenbereich aufgenommen und abgespeichert sein. Es hat sich in Experimenten gezeigt, dass je mehr Aufnahmen eines Fingerabdrucks verwendet werden, und auf dem Dokument abgespeichert sind, desto bessere Ergebnisse insbesondere bei der FRR, also die Wahrscheinlichkeit, dass die richtige Person fälschlich abgewiesen wird, erzielt werden können.

Bei dem automatischen computergestützten biometrischen Verifikationsverfahren wird das mehrfach auf dem Identifikationsdokument abgespeicherte biometrische Merkmal ausgelesen und mit dem aktuell durch einen Sensor erfassten verglichen. Es wird dann kein typischer 1:1-Vergleich des biometrischen Merkmals mehr durchgeführt, sondern ein sogenannter 1:N-Vergleich, da die Daten des aktuell sensorisch erfassten biometrischen Merkmals mit mehreren auf dem Identitätsdokument abgespeicherten Datensätzen für das biometrische Merkmal unter verschiedenen Aufnahmebedingungen verglichen wird.

So wird bei den Vergleichen jeweils eine Erkennungswahrscheinlichkeit oder ein Übereinstimmungsmaß berechnet, das z.B. auf dem Bereich 0 bis 100 normiert sein kann. Es wird ein Schwellenwert vorgegeben, der in der Regel empirisch an einer Stichprobe ermittelt wird, mit dem das Übereinstimmungsmaß verglichen wird.

Im vorliegenden Fall wird aus der Mehrzahl der berechneten Übereinstimmungsmaße, das mit dem höchsten Wert ausgewählt und mit dem vorgegebenen Schwellenwert verglichen. Liegt das ausgewählte Übereinstimmungsmaß über dem Schwellenwert, wird festgestellt, dass die Identität der Person verifiziert ist.

Z.B. können auf dem Identitätsdokument die Datensätze eines Fingerabdrucks, der unter fünf Aufnahmebedingungen erfasst wurde, gespeichert sein und die Identität der Person als verifiziert festgestellt werden, wenn nur einer der abgespeicherten der Datenabdrucksätze mit dem aktuell sensorisch erfassten Fingerabdruck ein den Schwellenwert übersteigendes Übereinstimmungsmaß ergibt. Dies hat den Vorteil, dass eine Person, die den Finger bspw. nur flüchtig mit einer Seite auf den Fingerabdrucksensor auflegt, immer noch als positiv identifiziert festgestellt werden kann, und nicht dazu gezwungen werden muss, den Finger erneut aufzulegen, um schließlich zu einer Verifikation der Identität zu gelangen.

Die mehreren Übereinstimmungsmaße werden miteinander kombiniert, um ein zweites Gesamtübereinstimmungsmaß zu berechnen. Es können z.B. mehrere Übereinstimmungsmaße addiert, miteinander multipliziert oder durch andere in der Wahrscheinlichkeitsrechnung bekannte Verknüpfungen kombiniert werden, um dieses zweite Gesamtübereinstimmungsmaß zu berechnen. Dadurch können auch Fälle erfasst werden, in denen jedes einzelne Übereinstimmungsmaß knapp unterhalb des vorgegebenen Schwellenwertes liegt. Es ist nämlich sehr unwahrscheinlich, dass ein "falscher", nicht identischer Fingerabdruck mehrfach knapp unterhalb des Schwellenwertes für die Akzeptanz liegt. Liegen bei mehreren Vergleichen des abgespeicherten biometrischen Materials mit dem aktuell sensorisch erfassten Merkmal die Übereinstimmungsmaße nur knapp unterhalb des Schwellenwertes für die Akzeptanz, ist die Wahrscheinlichkeit umgekehrt sehr hoch, dass es sich dennoch um die richtige Person handelt, obwohl in jedem einzelnen Fall das Übereinstimmungsmaß unterhalb des Schwellenwertes lag. Dies konnte in statistischen Analysen mit umfangreichen Tests belegt werden.

Es ist ferner vorgesehen, dass die Mehrzahl von vorherigen Aufnahmen desselben biometrischen Merkmals, z.B. des Abdrucks eines Fingers, lagerichtig überlagert werden, d.h. in der Weise, dass die charakteristischen Merkmale positionsgleich sind, und als gemittelter Bilddatensatz auf dem Identifikationsdokument abgespeichert sind. Dieses überlagerte Mischbild kann dann mit dem aktuell aufgenommenen biometrischen Merkmalsdatensatz verglichen werden, um ein mittleres Übereinstimmungsmaß zu bestimmen.

Es ist ferner bevorzugt, dass die Datensätze des biometrischen Merkmals in komprimierter Form auf dem Identifikationsdokument aufgezeichnet sind, so dass auch bei kontaktloser Auslese, z.B. über einen in dem Identitätsdokument vorgesehenen Transponder, das Auslesen der Datensätze dem Identitätsdokument durch ein Lesegerät in kurzer Zeit möglich ist.

Nach einer bevorzugten Ausführungsform können jeweils mehrere Datensätze mehrerer Finger aus dem Identitätsdokument ausgelesen werden und mit den entsprechenden Fingerabdrücken, die zeitlich aufeinander folgend durch Auflegen der jeweiligen Finger auf einen Sensor erfasst werden, verglichen werden. In dieser Ausführungsform ist es auch möglich, durch die Reihenfolge der Auflage der Finger Informationen zu übermitteln. Z.B. kann als normale Reihenfolge einer Zugangskontrolle das Auflegen von Daumen, Zeigefinger und Ringfinger nacheinander vorgesehen sein; wenn eine Person diese Finger in einer anderen Reihenfolge auflegt, kann dies als geheimes Signal ausgewertet werden, dass die Person unter Bedrohung durch eine andere Person gezwungen wird, den Zugang zu öffnen, so dass z.B. der Zugang sich zwar öffnet, aber in geeigneter Weise ein Alarm ausgelöst werden kann.

Zur weiteren Erhöhung der Fälschungssicherheit kann vorgesehen sein, dass die biometrischen Datensätze des biometrischen Merkmals, die unter unterschiedlichen Aufnahmebedingungen auf dem Identitätsdokument aufgezeichnet sind, jeweils doppelt, und zwar mit unterschiedlicher Aufzeichnungsart vorhanden sind und ausgelesen werden, z.B. sämtliche Fingerabdruckdatensätze einmal in einem Chip gespeichert und einmal als Barcode aufgedruckt. Durch Vergleich der unterschiedlichen Aufzeichnungsarten kann überprüft werden, ob Datensätze einer Art manipuliert worden sind.

Gemäß einem weiteren Aspekt der Erfindung ist ein biometrisches Identifikationsdokument zur Verwendung in einem Verfahren zur automatischen biometrischen Verifikation nach der vorliegenden Erfindung vorgesehen, wobei auf diesem Identifikationsdokument die biometrischen Datensätze einer Mehrzahl von vorherigen Merkmalsaufnahmen des biometrischen Merkmals unter unterschiedlichen Aufnahmebedingungen in maschinenlesbarer Form aufgezeichnet sind.

Die Erfindung wird im Folgenden anhand eines Beispiels in den Figuren weiter erläutert, in denen:
Figur 1 ein Graph ist, in dem die Fehlerraten als Funktion des Schwellenwertes bei einem herkömmlichen Verfahren zur Verifikation der Identität über einen Fingerabdruck aufgetragen sind; und
Figur 2 ein Graph ist, in dem die Fehlerraten bei einem erfindungsgemäßen Verfahren im Vergleich zu dem herkömmlichen Verfahren aus Figur 1 aufgetragen sind.

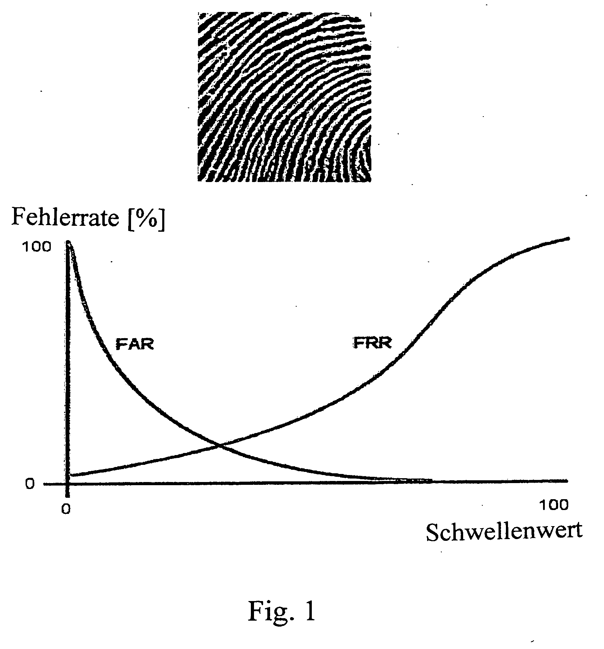

Figur 1 zeigt die Fehlerraten eines herkömmlichen automatischen Verfahrens zur Verifikation der Identität einer Person über den Vergleich eines aktuell sensorisch erfassten Fingerabdruckbildes und eines Datensatzes eines vorher abgespeicherten Fingerabdruckbildes auf dem Identitätsdokument. Für die beiden biometrischen Datensätze wird ein Übereinstimmungsmaß berechnet und die Identität der Person als verifiziert festgestellt, wenn das Übereinstimmungsmaß oberhalb eines Schwellenwertes liegt. Wird dieser Schwellenwert niedrig angesetzt, so ist die Wahrscheinlichkeit groß, dass eine Person mit einem nicht zu ihr gehörigen Identitätsdokument fälschlich als identifiziert verifiziert wird (FAR = False Acceptance Rate), d.h. die Kriterien für positive Identifizierung sind zu locker. Umgekehrt ist dann die Wahrscheinlichkeit, dass eine Person mit dem zu ihr gehörigen richtigen Identitätsdokument fälschlich als nicht verifiziert zurückgewiesen wird (FRR = False Rejection Rate) niedrig. Da es für die Erkennungssicherheit wünschenswert ist, sowohl FAR als auch FRR möglichst klein zu halten, muss bei den herkömmlichen Verfahren ein Kompromiss eingegangen werden, der in der Regel dahingehend vorgenommen wird, dass gefordert wird, dass der FAR-Wert aus Sicherheitsgründen klein ist, z.B. kleiner als 1%, wobei dann die Unbequemlichkeit in Kauf zu nehmen ist, dass der FRR-Wert relativ hoch ist. Das bedeutet im Ergebnis, dass für viele Personen die Verifikation nicht beim ersten Versuch festgestellt werden kann, sondern diese ihren Finger wiederholt auf den Fingerabdrucksensor legen müssen, bis schließlich eine hinreichende Übereinstimmung mit dem abgespeicherten Fingerabdruck-datensatz auf dem Identitätsdokument festgestellt werden kann. Dies ist insbesondere bei Fingerabdrucksensoren mit kleinen Sensorflächen der Fall, da die Person hier den Finger positionsgenau auflegen muss, damit der Fingerbereich, der von dem Sensor erfasst wird, dem der vorherigen Fingerabdruckaufnahme, deren Datensatz auf dem Identitätsdokument gespeichert ist, entspricht.

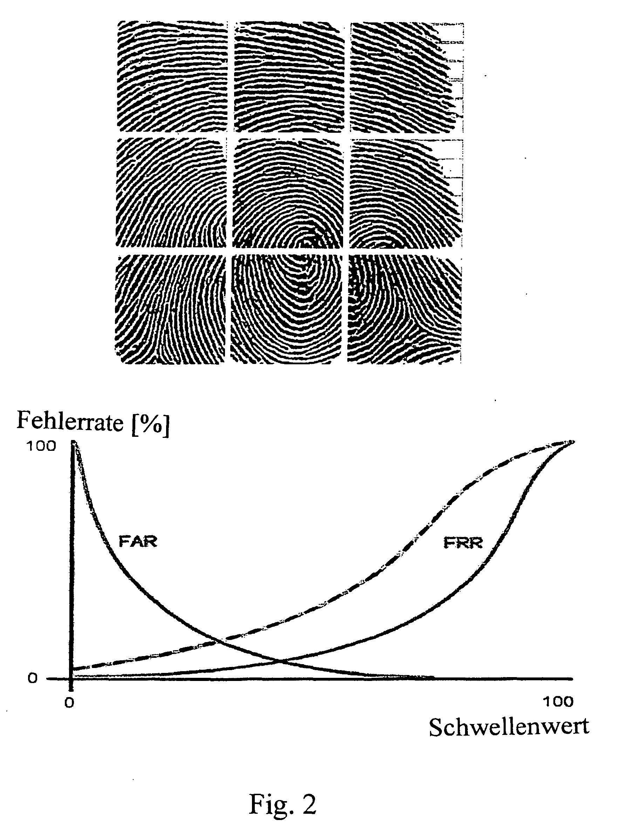

Figur 2 zeigt den entsprechenden Graphen eines automatischen Verifikationsverfahrens für die Identität einer Person gemäß der vorliegenden Erfindung, bei dem die Datensätze einer Mehrzahl von Fingerabdruckaufnahmen, die unter unterschiedlichen Aufnahmebedingungen aufgenommen wurden, auf dem Identitätsdokument aufgezeichnet sind. Die Fingerabdruckdatensätze sind symbolisch oben in Figur 2 dargestellt; in diesem Beispiel werden 9 Datensätze des Fingerabdrucks desselben Fingers verwendet, wobei im vorliegenden Beispiel die Aufnahmeflächen jeweils nur einen Teilbereich der Fingerfläche überdecken.

In dem vorliegenden Ausführungsbeispiel wird der aktuell sensorisch aufgenommene Fingerabdruck als Datensatz codiert und dieser Datensatz mit den mehreren entsprechenden Fingerabdruckdatensätzen auf dem Identitätsdokument jeweils verglichen, wobei jeweils ein Übereinstimmungsmaß berechnet wird. Es wird dann derjenige aufgezeichnete Datensatz ausgewählt, der das höchte Übereinstimmungsmaß liefert ("best fit"), und dieses Übereinstimmungsmaß mit dem Schwellenwert verglichen.

Figur 2 zeigt, dass bei Vergleich von mehreren biometrischen Datensätzen desselben Merkmals mit dem aktuell aufgenommenen biometrischen Merkmal und bei Auswahl des am besten passenden abgespeicherten Datensatzes die Wahrscheinlichkeit von falschen Zurückweisungen (FRR) sich gegenüber den herkömmlichen Verfahren deutlich reduziert. Die FRR-Kurve ist für dieses Beispiel mit einer durchgezogenen Linie dargestellt der entsprechenden, gestrichelt gezeichneten FRR-Kurve gegenübergestellt, die bei einem herkömmlichen automatischen Verifikationsverfahren wie in dem Ausführungsbeispiel nach Figur 1 mit einem Einzelvergleich erzielt werden kann. Es ist zu erkennen, dass mit diesem Ausführungsbeispiel eine Verkleinerung der FRR-Werte erreicht wird, d.h. die Wahrscheinlichkeit, dass eine Person trotz Vorlage des richtigen Identitätsdokuments mit dem richtigen biometrischen Daten fälschlich zurückgewiesen wird, ist deutlich reduziert.

## Patentansprüche

1. Verfahren zur automatischen Verifikation der Identität einer Person durch Vergleich eines aktuell sensorisch aufgenommenen biometrischen Merkmals der Person mit einem biometrischen Datensatz einer vorherigen Merkmalsaufnahme und durch Berechnung ein Übereinstimmungsmaßes auf Grundlage des Vergleichs, wobei die biometrischen Datensätze einer Mehrzahl von vorherigen Merkmalsaufnahmen, die unter unterschiedlichen Aufnahmebedingungen aufgenommen wurden, jeweils mit den aktuell aufgenommenen biometrischen Merkmalsdaten verglichen werden und jeweils ein Übereinstimmungsmaß berechnet wird, und dass die Identität als verifiziert festgestellt wird, wenn wenigstens das höchste Übereinstimmungsmaß oberhalb eines vorgegebenen Schwellenwertes liegt, **dadurch gekennzeichnet, dass** die biometrischen Datensätze der vorherigen Merkmalsaufnahmen aus einem Identitätsdokument aufgezeichnet als Barcode, gespeichert in einem Chip oder Transponder ausgelesen werden und dass ferner ein biometrischer Datensatz einer lagerichtigen Überlagerung der Mehrzahl von vorherigen Merkmalsaufnahmen, die unter unterschiedlichen Aufnahmebedingungen aufgenommen wurden, von dem Identitätsdokument eingelesen wird und dieses überlagerte Mischbild mit den aktuell aufgenommenen biometrischen Merkmalsdatensatz verglichen wird, um ein mittleres Übereinstimmungsmaß zu bestimmen, das mit wenigstens einem Übereinstimmungsmaß stochastisch kombiniert wird, um ein Gesamtübereinstimmungsmaß zu berechnen, und dass die Identität als verifiziert festgestellt wird, wenn das Gesamtübereinstimmungsmaß oberhalb eines vorgegebenen Gesamtschwellenwertes liegt.

2. Verfahren nach einem der vorhergehenden Ansprüche, **dadurch gekennzeichnet, dass** die biometrischen Datensätze in komprimierter Form aus dem Identifikationsdokument ausgelesen werden, so dass auch bei kontaktloser Auslese eine kurze

3. Verfahren nach einem der vorhergehenden Ansprüche, **dadurch gekennzeichnet, dass** als biometrisches Merkmal wenigstens ein Fingerabdruck der Person verwendet wird.

4. Verfahren nach Anspruch 3, **dadurch gekennzeichnet, dass** die Fingerabdrücke mehrerer Finger der Person als biometrisches Merkmal verwendet werden.

5. Verfahren nach Anspruch 4, **dadurch gekennzeichnet, dass** die die zeitliche Reihenfolge, in der die mehreren Fingerabdrüke sensorisch aufgenommen und ausgewertet werden, mit einer vorgegebenen Reihenfolge verglichen wird, wobei eine bestimmte Abweichungen von der vorgegebenen Reihenfolge die Auslösung eines Alarms bewirkt.

6. Verfahren nach einem der vorhergehenden Ansprüche, **dadurch gekennzeichnet, dass** die biometrischen Datensätze einer Mehrzahl von vorherigen Merkmalsaufnahmen, die unter unterschiedlichen Aufnahmebedingungen aufgenommen wurden, aus dem Identitätsdokument jeweils aus wenigstens zwei unabhängigen Aufzeichnungen unterschiedlicher Art ausgelesen werden, um durch Vergleich der unterschiedlichen Aufzeichnungsarten überprüfen zu können, ob Datensätze einer Art manipuliert worden sind.

7. Biometrisches Identifikationsdokument zur Verwendung in einem Verfahren nach einem der vorhergehenden Ansprüche, **dadurch gekennzeichnet, dass** auf dem Identifkationsdokument die biometrischen Datensätze einer Mehrzahl von vorherigen Merkmalsaufnahmen des biometrischen Merkmals, die unter unterschiedlichen Aufnahmebedingungen aufgenommen wurden, und ein biometrischer Datensatz einer lagerichtigen Überlagerung der Mehrzahl von vorherigen Merkmalsaufnahmen in maschinenlesbarer Form aufgezeichnet sind.

8. Biometrisches Identifikationsdokument nach Anspruch 7, **dadurch gekennzeichnet, dass** auf dem Identifkationsdokument die Datensätze einer Mehrzahl von Fingerabdruckaufnahmen eines Fingers, die unter unterschiedlichen Aufnahmebedingungen aufgenommen wurden, abgespeichert sind.

9. Biometrisches Identifikationsdokument nach Anspruch 7 oder 8, **dadurch gekennzeichnet, dass** das Identifikationsdokument mit einem Speicherchip, einem Transponder oder einem Barcode versehen ist, in dem die biometrischen Datensätze aufgezeichnet sind.

## Claims

1. A method for the automatic verification of the identity of a person by comparison of a current sensor-recorded biometric characteristic of the person with a biometric data record of a previously recorded characteristic and through calculation a degree of similarity on the basis of the comparison, whereby the biometric data records of several previously recorded characteristics, recorded under various recording conditions, are respectively compared with the currently recorded biometric characteristic data, and in each case, a degree of similarity is calculated, and that the identity is determined as verified when at least the highest degree of similarity lies above a predetermined threshold value, **characterised in that** the biometric data records of the previously recorded characteristic are read out from an identity document recorded as a barcode, stored in a chip or transponder, and that, further, a biometric data record of an aligned superimposition of the several previously recorded characteristics, recorded under various recording conditions, is read by the identity document, and this superimposed merged image is compared with the currently recorded biometric characteristic-data record to determine an average degree of similarity that is stochastically combined with at least one degree of similarity in order to calculate an overall degree of similarity, and that the identity is determined as verified, when the total degree of similarity lies above a predetermined total threshold value.

2. A method according to the preceding claim, **characterised in that** the biometric data record is read out in compressed form from the identification document, such that with a contact-free readout also, a short read time can be provided.

3. A method according to one of the preceding claims, **characterised in that** at least one fingerprint of the person is used as a biometric characteristic.

4. A method according to claim 3, **characterised in that** the fingerprints from more than one finger of the person are used as biometric characteristics.

5. A method according to claim 4, **characterised in that** the time sequence in which the multiple finger prints are sensor-recorded and evaluated is compared with a specified sequence, whereby a specific deviation from the previous sequence causes an alarm to be set off.

6. A method according to one of the preceding claims, **characterised in that** the biometric data records of several previously recorded characteristics, recorded under various recording conditions, are read out from the identity document, in each case, from at least two independent recordings of different types, in order to be able to check by comparison of the various recording types, whether the data records have been manipulated in some way.

7. A biometric identification document for use in a procedure according to the preceding claims, **characterised in that** the biometric data records of several previously recorded characteristics of biometric characteristics, recorded under various recording conditions, and a biometric record of an aligned superimposition of characteristics from previously recorded characteristics are recorded in machine-readable form on the identification document.

8. A biometric identification document according to claim 7, **characterised in that** the data records of several fingerprint recordings of a finger, recorded under various recording conditions, are stored on the identification document.

9. A biometric identification document according to claim 7 or 8, **characterised in that** the identification document is supplied with a storage chip, a transponder, or a barcode, in which the biometric data records are stored.

## Revendications

1. Procédé de vérification automatique de l'identité d'une personne grâce à la comparaison entre une caractéristique biométrique enregistrée actuellement par voie de capteur de la personne et un jeu de données biométrique d'un enregistrement de caractéristiques précédent, et en calculant un degré de concordance en fonction de la comparaison, les jeux de données biométriques d'une pluralité d'enregistrements de caractéristiques précédents, qui ont été enregistrés dans différentes conditions d'enregistrement, étant comparés respectivement aux données de caractéristiques biométriques enregistrées actuellement, et on calcule respectivement un degré de concordance, et en ce que l'identité est considérée comme vérifiée lorsqu'au moins le degré de concordance maximal est supérieur à une valeur seuil prédéfinie, **caractérisé en ce que** les jeux de données biométriques des enregistrements de caractéristiques précédents, issus d'un document d'identité stocké sous la forme d'un code-barres, et mémorisés dans une puce ou un transpondeur, sont lus et **en ce qu'**en outre, un jeu de données biométrique d'une superposition parfaite en termes de positionnement de la pluralité d'enregistrements de caractéristiques précédents, qui ont été enregistrés dans des conditions d'enregistrement différentes, sont lus à partir du document d'identité, et cette image mixte superposée est comparée au jeu de données actuellement enregistré des caractéristiques biométriques afin de déterminer un degré de concordance moyen, qui est combiné à au moins un degré de concordance par voie stochastique, afin de calculer un degré de concordance global, et **en ce que** l'identité est considérée comme vérifiée lorsque le degré de concordance global est supérieur à une valeur seuil globale prédéfinie.

2. Procédé selon l'une quelconque des revendications précédentes, **caractérisé en ce que** les jeux de données biométriques sont extraits sous forme comprimée du document d'identification de telle sorte que, même lors d'une extraction sans contact, une durée d'extraction réduite peut être garantie.

3. Procédé selon l'une quelconque des revendications précédentes, **caractérisé en ce que**, comme caractéristique biométrique, on utilise au moins une empreinte digitale de la personne.

4. Procédé selon la revendication 3, **caractérisé en ce qu'**on utilise les empreintes digitales de plusieurs doigts de la personne comme caractéristique biométrique.

5. Procédé selon la revendication 4, **caractérisé en ce que** l'ordre temporel, dans lequel les différentes empreintes digitales sont enregistrées à l'aide d'un capteur et évaluées sont comparées à un ordre prédéfini, les écarts déterminés par rapport à l'ordre prédéfini provoquant le déclenchement d'une alarme.

6. Procédé selon l'une quelconque des revendications précédentes, **caractérisé en ce que** les jeux de données biométriques d'une pluralité d'enregistrements des caractéristiques précédents, qui ont été enregistrés dans des conditions d'enregistrement différentes, sont extraits du document d'identité respectivement à partir d'au moins deux enregistrements indépendants de type différent, afin de pouvoir ainsi vérifier à l'aide d'une comparaison entre les différents types d'enregistrements si les jeux de données d'un type ont été manipulés.

7. Document d'identification biométrique à utiliser dans un procédé selon l'une quelconque des revendications précédentes, **caractérisé en ce que**, sur le document d'identification, les jeux de données biométriques d'une pluralité d'enregistrements de caractéristiques précédents de la caractéristique biométrique, qui ont été enregistrés dans des conditions d'enregistrement différentes, et un jeu de données biométrique d'une superposition parfaite en termes de positionnement de la pluralité d'enregistrements de caractéristiques précédents sont stockés sous forme assimilable par machine.

8. Document d'identification biométrique selon la revendication 7, **caractérisé en ce que**, sur le document d'identification, sont mémorisés les jeux de données d'une pluralité d'enregistrements d'empreintes digitales d'un doigt, qui ont été enregistrés dans des conditions d'enregistrement différentes.

9. Document d'identification biométrique selon la revendication 7 ou 8, **caractérisé en ce que** le document d'identification est doté d'une puce de mémorisation, d'un transpondeur ou d'un code à barres, dans lequel les jeux de données biométriques sont stockés.
